# EUROPEAN PATENT APPLICATION

(11) **EP 4 339 151 A1**
(43) Date of publication of application: **20.03.2024**
(21) Application number: 23197195.3
(22) Date of filing: 13.09.2023
(51) Int. Cl.: B66F 9/065, B66F 17/00

(54) **A MULTIFUNCTIONAL LIFTING VEHICLE DESIGNED TO DETERMINE A LOAD DIAGRAM, AND RELATIVE METHOD**

(30) Priority: 14.09.2022 IT 202200018777
(71) Applicant: Merlo Project S.r.l., I-12020 S. Defendente di Cervasca (Cuneo) (IT)
(72) Inventor: MERLO, Mr. Amilcare, deceased (IT); CONTESSINI, Mr. Felice, I-12010 Cervasca (Cuneo) (IT)
(74) Representative: Notaro, Gianluca

(57) **Abstract**

A multifunctional lifting vehicle (1) comprises a frame, a telescopic arm (5) equipped with an attachment (7) for mounting a piece of equipment (8), a drive system for operating the telescopic arm (5) carrying said piece of equipment (8), and a control system (12) including a human-machine interface device (18). The control system (12) comprises an electronic control unit (E) programmed to determine a load diagram of the vehicle (1) according to the type of equipment (8), if the piece of equipment (8) connected to the arm (5) belongs to a set of predetermined equipment stored in a memory associated with said control system (12). The electronic control unit (E) is also configured and programmed for:
- detecting a new piece of equipment (8) connected to said attachment (7) and sending a non-recognition signal, if said new piece of equipment (8) is not part of said set of predetermined equipment,
- displaying on the human-machine interface device (18) a manual selection menu to select a plurality of operating and identification parameters of said new piece of equipment (8),
- determining a new load diagram of the vehicle (1) defined as a function of said plurality of parameters, and
- viewing said new load diagram.

## Description

### Field of the invention

The present invention relates to a multifunctional lifting vehicle comprising
- a fixed or rotating self-propelled frame having front supports and rear supports on wheels and/or stabilizers,
- a telescopic arm articulated to the frame and provided with an attachment for mounting a piece of equipment,
- a drive system for operating the telescopic arm carrying said piece of equipment,
- a control system associated with said drive system, comprising a human-machine interface device,
- wherein said control system comprises an electronic control unit programmed to determine a load diagram of the vehicle according to the type of equipment, if the piece of connected equipment belongs to a set of predetermined equipment stored in the memory associated with said control system.

### Description of the prior art

A vehicle of the type indicated above is disclosed for example in document EP 3 889 096 A1. The vehicle may be equipped with different types of equipment, such as forks, shovels, aerial platforms, etc. During operation, the load applied to the piece of equipment located at the end of the telescopic arm can vary widely.

In accordance with a well-known technology, multifunctional lifting vehicles are equipped with a load diagram which indicates the maximum load that can be applied to the end of the lifting arm according to the position of the equipment. Compliance with the load diagram is the responsibility of the operator, who must have optimal training and knowledge of the vehicle, and must know the limits of the effective working range of the arm, according to the load applied to the equipment each time.

One of the key safety aspects of a lifting vehicle is its longitudinal rollover stability. Vehicles with lifting arms are equipped with an anti-rollover safety system, which stops movement of the lifting arm of the vehicle, when the stability limit is reached. In some known solutions, this occurs when the load on the rear supports drops below a pre-set reference threshold. In fact, reduction of the load on the rear axle below a critical threshold indicates that the vehicle is close to overturning.

The need for a load diagram, in graphical or tabular form, is a peculiarity of lifting machines, the capacity of which may vary according to the spatial positioning of the lifting means and the load lifted, as well as its size, or other elements concerning a specific operating configuration of the vehicle itself. In this regard, in addition to the type of supports on the ground, the extension and shape of the support plant and the speed of movement, it is also necessary to consider the specific equipment installed.

Various solutions are now known for displaying such diagrams, starting from the more traditional ones consisting of a simple paper support, up to digital methods, which make use of fixed screens located in the vehicle control station.

Typically, equipment quantities and associated load diagrams are originally determined by the vehicle manufacturer. In the event that the user wishes to install a new type of equipment not included among those originally approved by the manufacturer, it is necessary to request subsequent authorization from the vehicle manufacturer. This situation is particularly disadvantageous in the case of vehicles equipped with automatic recognition of the connected equipment, since it becomes necessary to request modifications to the vehicle control system to allow correct use by the operator. Since these types of interventions are carried out after the vehicle has been placed on the market, they have a considerable impact in terms of costs and implementation times. Furthermore, in some situations, the vehicle manufacturer may refuse to approve equipment for technical or logistical reasons for sourcing the equipment or for commercial reasons.

In the context indicated above, even if an unknown piece of equipment is approved by the manufacturer, there would still be a need to define the relative new load diagram.

### Object and summary of the invention

The object of the present invention is to propose a lifting vehicle and a relative method for overcoming the problems indicated above.

According to the present invention, this object is achieved by a vehicle and a method having the characteristics forming the subject of the following claims.

The claims form an integral part of the disclosure provided here in relation to the invention.

### Brief description of the drawings

The present invention will now be described in detail with reference to the attached drawings, given purely by way of non-limiting example, wherein:
- Figure 1 is a perspective view of a fixed frame lifting vehicle with a telescopic arm,
- Figure 2 is an enlarged view of a piece of equipment connected to the telescopic arm of the vehicle,
- Figures 3, 4 are elevational views of a rotating frame lifting vehicle with telescopic arm,
- Figure 5 is a simplified diagram of the control circuit of the vehicle,
- Figure 6 is a perspective view of a human-machine interface on board the vehicle, and
- Figures 7-9 show various operating screens of the human-machine interface.

### Detailed description of the embodiments of the invention

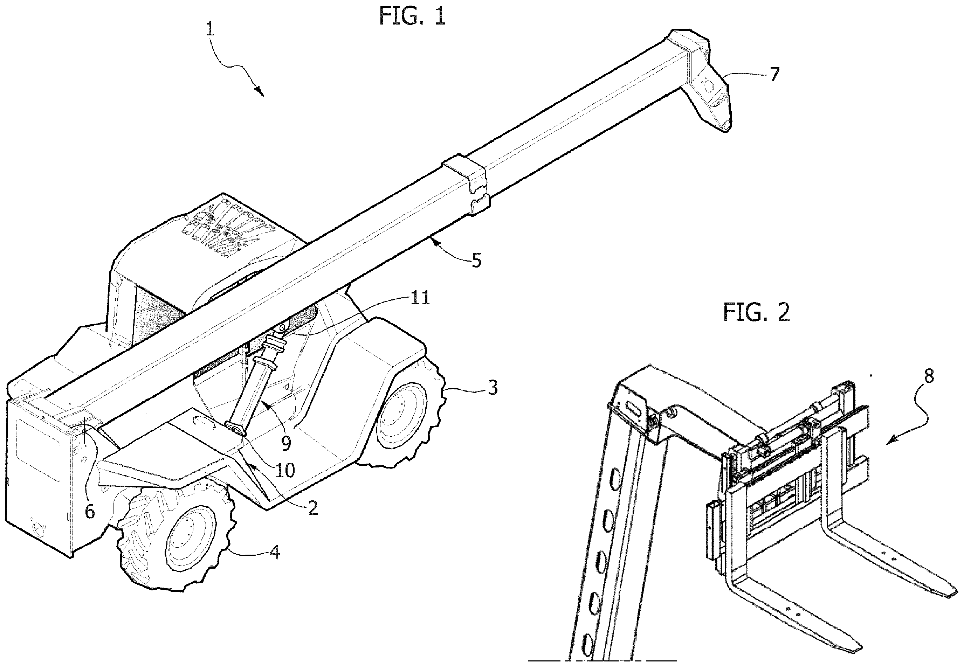

With reference to Figure 1, numeral 1 indicates a lifting vehicle comprising a fixed self-propelled frame 2 having front supports 3 and rear supports 4 on wheels. The vehicle 1 comprises a telescopic arm 5 articulated in the rear section of the frame 2 about a transverse axis 6. The telescopic arm 5 is provided at one end with a connection 7 for connecting equipment 8 of different types. Purely by way of example, Figure 2 comprises an example of piece of equipment 8, in particular a fork shifter, connected to the telescopic arm 5.

The vehicle 1 comprises a drive system configured to operate the telescopic arm 5 carrying the aforesaid piece of equipment 8. The drive system comprises at least one lifting/lowering cylinder 9 with ends articulated to the frame 2 and to the arm 5 about the respective axes 10, 11. The arm 5 is also equipped with a cylinder (not shown), which controls the telescopic extension and retraction movement of the arm 5. In one or more embodiments, the drive system may further comprise a hydraulic drive circuit including a main pump driven by a motor of the vehicle 1. The details relating to the hydraulic circuit are not described here, as they are widely known to the expert in the field in question.

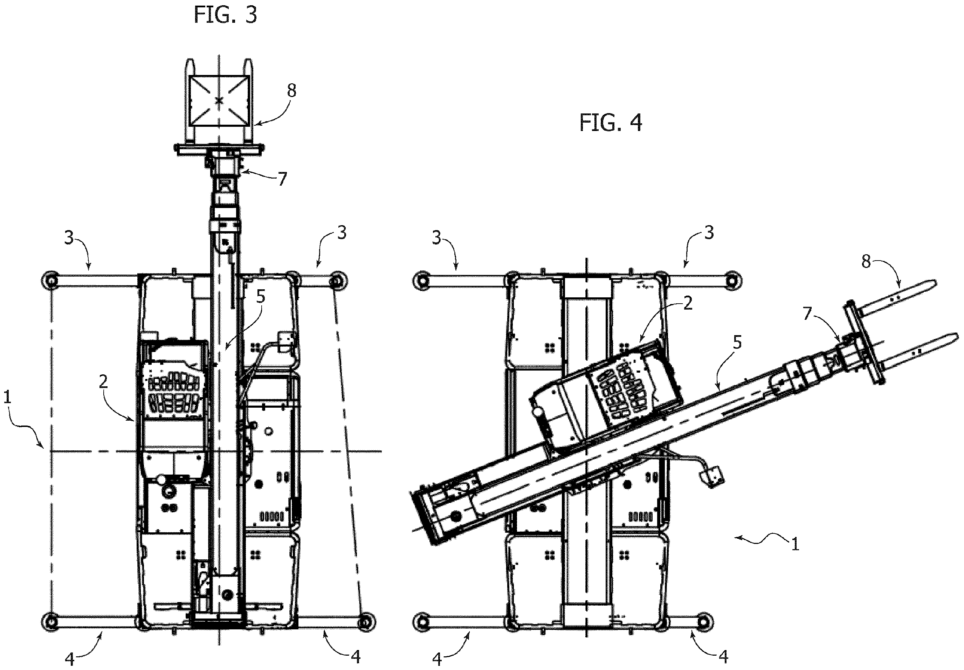

Figures 3, 4 illustrate a lifting vehicle 1 comprising a self-propelled frame 2 rotating with front and rear supports 3, 4 on stabilizers. The components of the vehicle 1 are indicated with the same references indicated above for the vehicle with fixed frame of Figure 1. It should, therefore, be noted that the present invention is equally applicable to a lifting vehicle with a fixed or rotating frame 2, both on wheels and on stabilizers.

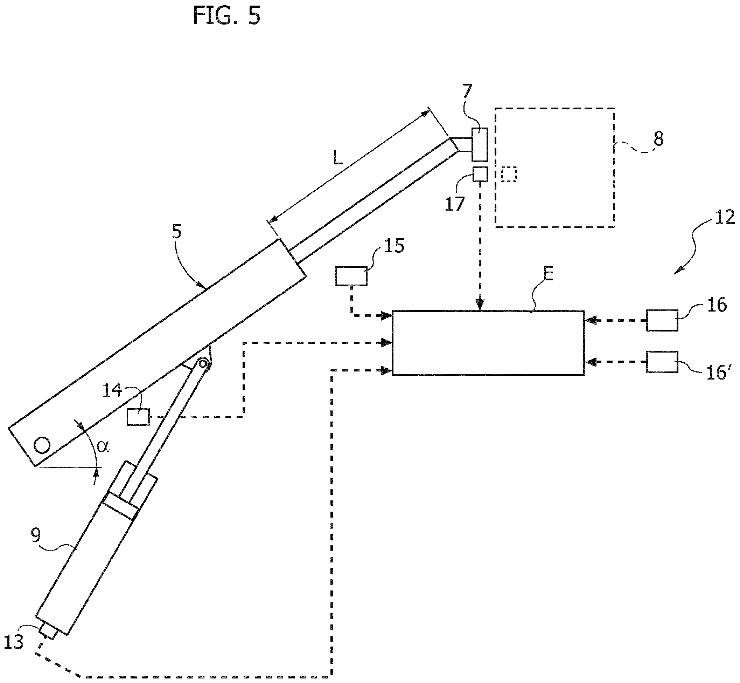

Figure 5 is a simplified diagram showing a control system 12 associated with the drive system of the vehicle 1. The control system 12 is arranged to control, among other things, respective operating valves of the hydraulic circuit. In one or more embodiments, the control system 12 comprises a load sensor 13, which provides an indication of the intensity of the load applied to the arm 5. The load sensor 13 may, for example, be a load cell applied to the lifting/lowering cylinder 9. The control system 12 also comprises sensors 14, 15 which detect, respectively, the inclination angle α of the arm 5 and the extension length L of the telescopic portion of the arm 5. The control system 12 further comprises one or more sensors 16 to detect the load on the supports 3 and/or 4 of the vehicle 1 and possibly other sensors 16' present on the vehicle 1 to detect, for example, the extension of the stabilizers and the rotation angle of an upper frame. The control system 12 also comprises a recognition unit 17 configured for recognizing the type of equipment 8 applied to the arm 5. The recognition unit 17 may, for example, be based on RFID technology.

According to a characteristic of the invention, the control system 12 comprises an electronic control unit E programmed to independently define a load diagram of the vehicle 1 according to the type of equipment 8, if the connected equipment 8 is part of a set of predetermined equipment stored within a memory associated with the control system 12. In other words, the control system 12 is configured to determine the load diagram relating to the connected equipment 8, provided that the equipment 8 has been recognized. To determine the load diagram, the electronic control unit E receives the signals coming from the sensors 13, 14, 15, 16, from the recognition unit 17, plus any information coming from other sensors 16' possibly present on the vehicle 1.

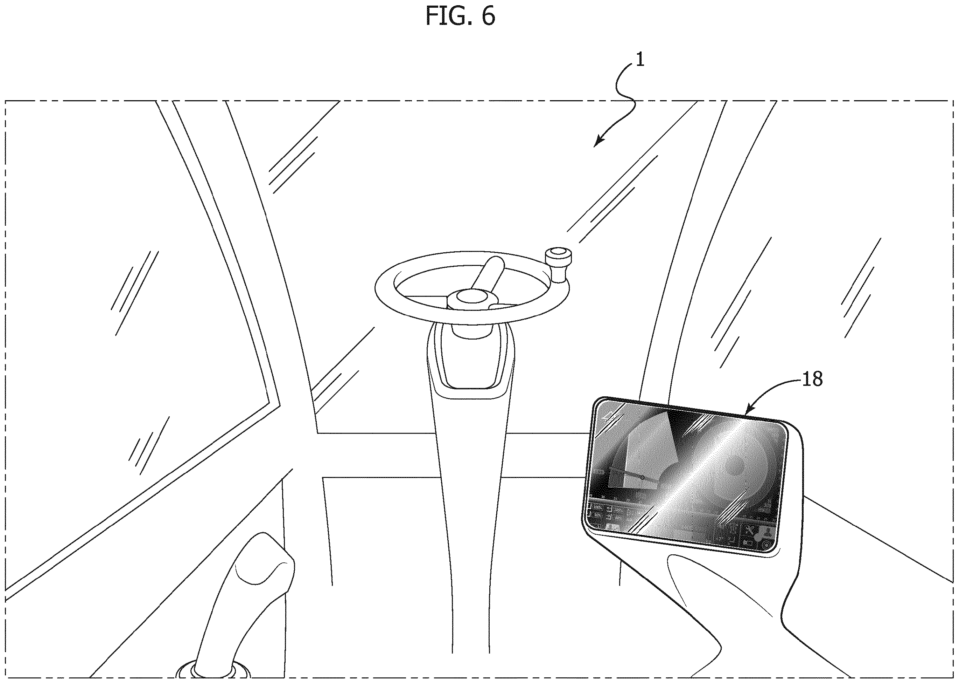

As shown in Figure 6, the vehicle 1 comprises a human-machine interface device 18, through which the user can manage all the operations of the vehicle 1. The human-machine interface device 18 may be a fixed screen inside the cabin of the vehicle 1, or a removable screen. In one or more embodiments, the human-machine interface device 18 may comprise control devices, such as push-button panels, or a tactile screen (touch screen) or a combination of the two.

According to the present invention, the control system 12 of the vehicle 1 is configured to determine a load diagram of the vehicle 1, even in the case where the connected equipment 8 is an "unknown" piece of equipment, i.e. not originally approved by the manufacturer of the vehicle 1, and therefore not included in the memorized set of predetermined equipment. In this regard, the electronic control unit E is programmed for:
- detecting a signal that a new piece of equipment 8 has been connected to the attachment 7 of the arm 5, wherein said new piece of equipment 8 is not part of the set of predetermined pieces of equipment stored within a local or remote memory associated with the control system 12 of the vehicle 1,
- displaying on the human-machine interface device 18 a manual selection menu to select a plurality of operating and identification parameters of the new piece of equipment 8,
- automatically determining a new load diagram of the vehicle 1 defined according to the plurality of identification parameters of the new piece of equipment 8 entered on the human-machine interface device 18,
- viewing the new load diagram on the human-machine interface 18.

The steps indicated above are started in the event that the recognition unit 17 cannot identify the piece of equipment 8 connected to the attachment device 7.

Following a detection signal of a new piece of equipment 8 sent to the electronic control unit E, by means of the human-machine interface device 18, the user may manually introduce into the control system 12 various identification parameters necessary to identify the characteristics of the connected piece of equipment 8, useful for determining the new load diagram.

In one or more embodiments, the aforesaid functional parameters of the new piece of equipment 8 comprise:
- various characteristic parameters of the piece of equipment 8, such as, for example, the weight, the position of the center of gravity, the maximum capacity and the position of the load center;
- further optional parameters such as, for example, a parameter expressed as a percentage reduction coefficient or as an additional safety factor.

The aforesaid parameters may also be entered using a mobile device (such as a tablet or smartphone) or an electronic processor, possibly used from a remote location. Thanks to this characteristic, it is possible to manually enter the operating parameters of the new piece of equipment 8 from a remote station, subject to authentication by the user. In this regard, the interface menu for entering the aforesaid parameters described above allows the setting and storage of different profiles of respective authorized users. The control system 12 is, therefore, configured to verify the user's identity by entering personal credentials (username and password) or by using a dedicated physical device, such as, for example, a key or magnetic card. The control system 12 is therefore arranged to admit or deny access to the operating modes for configuring the load diagram.

In one or more embodiments, the control system 12 comprises a module for wireless local connection which allows an authorized user to access the control system 12 for various operations such as, for example, updating the set of stored equipment 8. The electronic control unit E may also be programmed to download different configurations of a given piece of equipment 8 from a specific Internet domain.

Once the aforesaid parameters have been entered to determine the characteristics of the new piece of equipment 8, the control system 12 automatically calculates the new load diagram relating to the connected piece of equipment 8, to then be displayed on the screen of the human-machine interface device 18. Process means associated with the electronic control unit E are programmed and configured to receive and process the functional parameters entered by the user, with a view to calculating the new load diagram for each new piece of equipment 8 connected.

The process means are also programmed to memorize the functional parameters previously entered for each new "unknown" piece of equipment 8 connected.

In one or more embodiments, the process means are furthermore programmed to calculate the load diagrams, in case the new piece of equipment 8 is connected again after the use of the vehicle 1 with other equipment 8.

Furthermore, in one or more embodiments, the calculation of the new load diagram is performed by means of the same algorithm implemented to calculate the diagrams relating to equipment 8 already recognized and stored.

According to a further characteristic of the invention, the control system 12 is configured to limit the operation of the vehicle 1, so that the operation is constrained within the limits determined by the new load diagram. In this regard, the human-machine interface device 18 may have a selection menu arranged to select this limited operating mode.

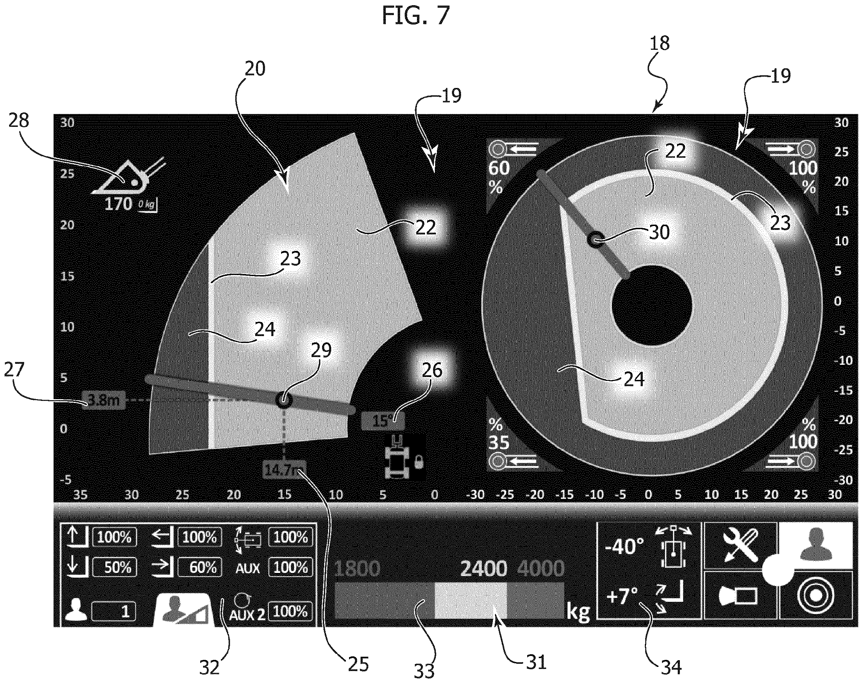

With reference to Figure 7, the human-machine interface device 18 displays a working area panel 19 with representation of a load diagram showing
working areas according to a side view 20 and a plan view 21. The drawings of Figure 7 are provided purely by way of example in order to understand qualitatively the operation of the system according to the invention.

The expression "working area" means the definition of a safe operating space, having known the load on the equipment and the type of equipment. Consequently, in the case of a new unrecognized piece of equipment 8, the working areas may be correctly displayed by recalling the previously stored functional parameters for the piece of equipment 8.

Returning to Figure 7, it should be noted that the load diagram comprises working areas 20, 21 define respective sub-areas 22, 23, 24 which respectively subdivide the diagram into:
- an area with permitted operations 22 (for example, displayed in green);
- an area with operations close to the permitted limit 23 (for example, displayed in yellow); and
- an area with prohibited operations 24 (for example, displayed in red).

In one or more embodiments, in association with the diagrams 20, 21, some operating parameters are also displayed, including:
- ground reach of the load 25;
- lifting angle 26 of the telescopic arm 5;
- height from the ground of the load 27;
- designation 28 of the installed equipment 8 not recognized;
- positioning point of the load 29 on the diagram with side view 20; and
- positioning point of the load 30 on the diagram with plan view 21.

Again with reference to the example of Figure 7, the working areas 20, 21 are displayed together with an auxiliary interaction window 31, which displays further operating conditions of the vehicle 1, including:
- summary of the operating limits of use 32 of the vehicle 1;
- indication of the load values 33; and
- indication of the positioning of the load 34

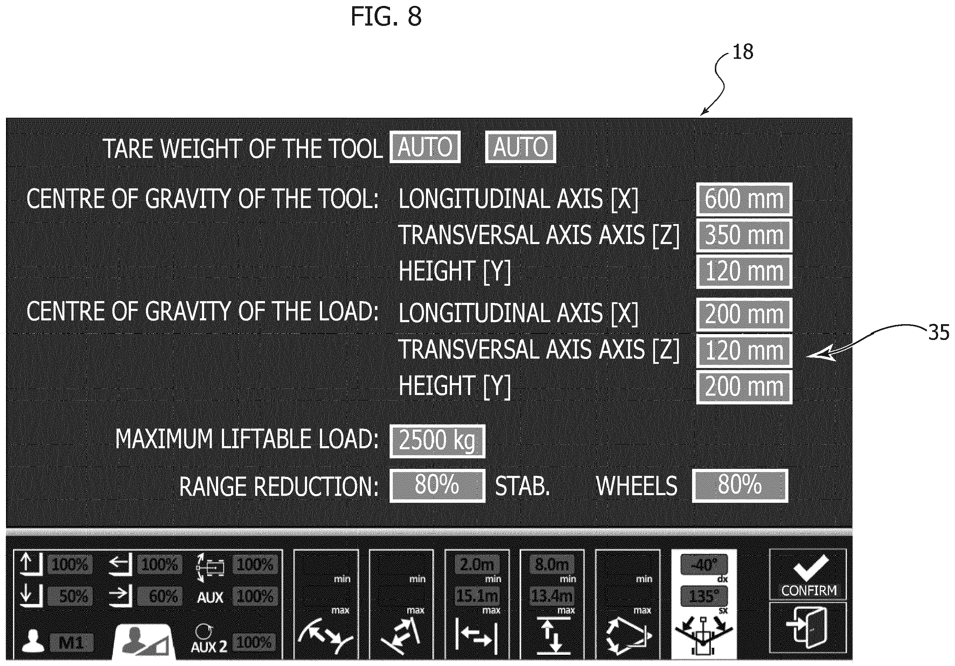

Figure 8 illustrates an operating screen 35 of the human-machine interface device 18 which displays a menu for manual entry of the identification parameters necessary to identify the characteristics of an "unknown" piece of connected equipment 8, useful for determining the new load diagram and the new working areas.

As previously indicated, the aforesaid parameters of the new piece of equipment 8 include various characteristic parameters of the piece of equipment 8, such as, for example, the weight, the position of the center of gravity, the maximum capacity and the position of the load center; further optional parameters such as, for example, a parameter expressed as a percentage reduction coefficient or as an additional safety factor.

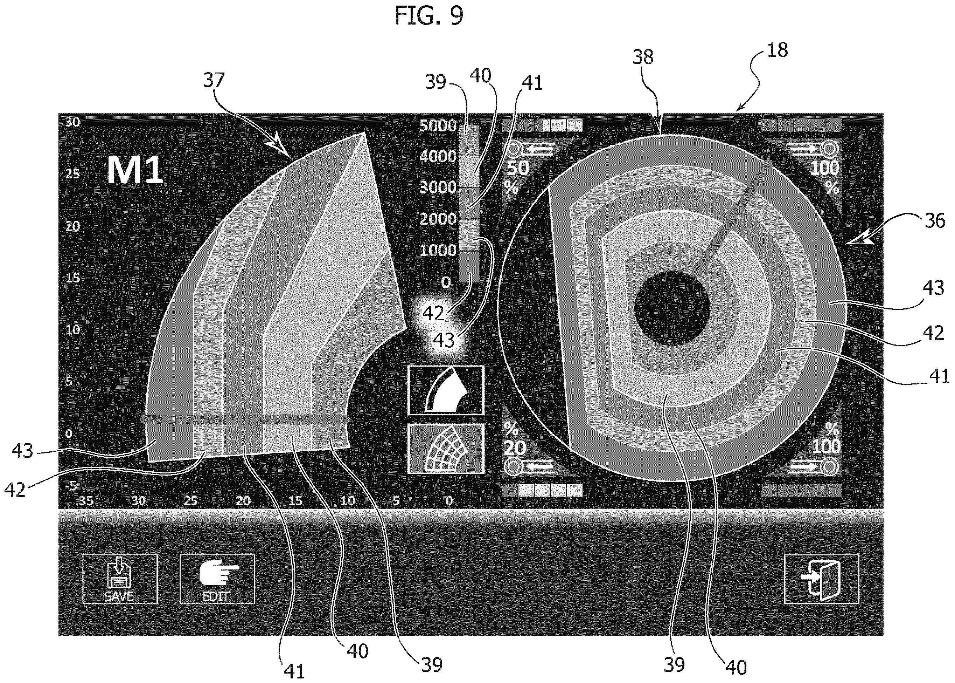

Figure 9 reports a further operating screen 36 of the human-machine interface device 18 which displays the load diagram processed on the basis of the parameters previously entered and the information received from the sensors 13,14,15,16,16'.

The diagrams are represented according to a side view 37 and a plan view 38. References 39,40,41,42,43 indicate different capacity ranges of the load diagram according to the side view 37 and plan view 38.

Of course, without prejudice to the principle of the invention, the details of construction and the embodiments can be widely varied with respect to those described and illustrated, without thereby departing from the scope of the invention as defined by the claims that follow.

## Claims

1. A multifunctional lifting vehicle (1) comprising:
- a fixed or rotating self-propelled frame (2) having front supports (3) and rear supports (4) on wheels and/or stabilizers,
- a telescopic arm (5) articulated to the frame (2) and provided with an attachment (7) for mounting a piece of equipment (8),
- a drive system for operating the telescopic arm (5) carrying said piece of equipment (8),
- a control system (12) associated with said drive system, comprising a human-machine interface device (18),
- wherein said control system (12) comprises an electronic control unit (E) programmed to determine a load diagram of the vehicle (1) according to the type of equipment (8), if the piece of equipment (8) connected to the arm (5) belongs to a set of predetermined equipment stored in a memory associated with said control system (12),
said lifting vehicle (1) being **characterized in that** the electronic control unit (E) is also configured and programmed for:
- detecting the type of the recognized piece of equipment (8) connected to the arm (5), if the piece of equipment (8) is part of said predetermined set,
- detecting a new piece of equipment (8) connected to said attachment (7) and sending a non-recognition signal, if said new piece of equipment (8) is not part of said set of predetermined equipment,
- displaying on the human-machine interface device (18) a manual selection menu to select a plurality of operating and identification parameters of said new piece of equipment (8),
- determining a new load diagram of the vehicle (1) defined as a function of said plurality of parameters, wherein said loa diagram indicates the maximum load that can be applied to the end of the lifting arm (5) according to the position of the equipment (8), and
- viewing said new load diagram.

2. A lifting vehicle (1) according to claim 1, **characterized in that** the control system (12) is configured to limit operation of the vehicle (1) within limits determined by said new load diagram.

3. A lifting vehicle (1) according to claim 1, **characterized in that** said parameters of the new piece of equipment (8) include designation, weight, center of gravity position, maximum capacity, and load center position of the new piece of equipment (8) connected to the arm (5).

4. A lifting vehicle (1) according to claim 3, **characterized in that** the control system (12) is configured to memorize the entered parameters of the new equipment (8), so as to automatically calculate the relative load diagram, if the new piece of equipment (8) is re-connected after use of the vehicle (1) with other equipment (8).

5. A lifting vehicle (1) according to claim 1, **characterized in that** the control system (12) comprises a load sensor (13) providing an indication of the intensity of the load applied to the arm (5), additional sensors (14 , 15) detecting, respectively, the angle of inclination of the arm (5) and the extension length of the telescopic portion of the arm (5), and other sensors (16') detecting the extension of the stabilizers and rotation angle of the frame (2).

6. A lifting vehicle (1) according to claim 3, **characterized in that** said parameters are entered by means of an electronic device located at a remote position with respect to the vehicle (1).

7. A method for determining a load diagram of a lifting vehicle (1) according to any of the previous claims, comprising:
- autonomously defining a load diagram of the vehicle (1) according to the type of equipment (8), connected to the telescopic arm (5), if the connected piece of equipment (8) belongs to a set of predetermined equipment stored in a memory associated with a control system (12) of the vehicle (1),
- detecting that a new piece of equipment (8) has been connected to said attachment (7) and sending a non-recognition signal, if said new piece of equipment (8) is not part of said set of predetermined equipment,
- displaying on a human-machine interface device (18) a manual selection menu to select a plurality of operating and identification parameters of said new piece of equipment (8),
- determining a new load diagram of the vehicle (1) defined as a function of said plurality of parameters, wherein said load diagram indicates the maximum load that can be applied to the end of the lifting arm (5) according to the position of the equipment (8), and
- viewing said new load diagram.
